Europäisches Patentamt

European Patent Office

Office européen des brevets

(19)

(11) Numéro de publication: **0 189 891**

**A1**

(12) # DEMANDE DE BREVET EUROPEEN

(21) Numéro de dépôt: **86101075.9**

(22) Date de dépôt: **28.01.86**

(51) Int. Cl.⁴: **H 01 M 6/16**

(30) Priorité: 30.01.85 FR 8501309

(43) Date de publication de la demande:
06.08.86 Bulletin 86/32

(84) Etats contractants désignés:
AT BE CH DE FR GB IT LI LU NL SE

(71) Demandeur: **Société Anonyme dite SAFT**
**156, avenue de Metz**
**F-93230 Romainville(FR)**

(72) Inventeur: **Gabano, Jean-Paul**
**11 rue des Dames des Roches**
**F-86000 Poitiers(FR)**

(72) Inventeur: **Broussely, Michel**
**53 avenue de Poitiers**
**F-86240 Liguge(FR)**

(72) Inventeur: **Pereira-Ramos, Jean-Pierre**
**9 place de la Croix des Mèches**
**Tour 2 F-94000 Creteil(FR)**

(72) Inventeur: **Messina, Richard**
**19 rue des Jardins Le Menhir**
**F-91800 Boussy Saint Antoine(FR)**

(72) Inventeur: **Perichon, Jacques**
**9 avenue Saint Jacques**
**F-91600 Savigny sur Orge(FR)**

(74) Mandataire: **Weinmiller, Jürgen et al,**
**Zeppelinstrasse 63**
**D-8000 München 80(DE)**

(54) **Générateur électrochimique à électrolyte non aqueux.**

(57) Un générateur selon l'invention comporte un électrolyte non aqueux comprenant au moins un solvant appartenant à la classe des sulfones linéaires aliphatiques ou aromatiques. Sa matière active négative est par exemple le lithium, et sa matière positive est choisie dans le groupe formé par des oxydes, oxysels, sulfures.

Utilisations possibles à des températures comprises entre 100°C et 200°C.

FIG.1

EP 0 189 891 A1

## Générateur électrochimique à électrolyte non aqueux

La présente invention concerne un générateur électrochimique à électrolyte non aqueux et notamment un générateur dont la matière active négative est choisie dans le groupe formé par les métaux alcalins, alcalinoterreux, le magnésium, l'aluminium, et dont la matière active positive est choisie dans le groupe formé par des oxydes, oxysels, sulfures, halogénures de métaux de transition.

La présente invention s'intéresse tout particulièrement aux générateurs de type précité susceptibles de fonctionner à des températures élevées, comprises par exemple entre 100°C et 200°C. Cette gamme de températures correspond aux conditions d'utilisation des piles dans des applications touchant à la géothermie et à l'exploration pétrolière.

On a essayé de mettre en oeuvre dans ces générateurs des électrolytes dont les solvants étaient des sulfones cycliques du type sulfolane ou 3-méthylsulfolane parce que ces composés sont liquides à température ambiante. Malheureusement leurs stabilités chimique et électrochimique se sont avérées tout à fait insuffisantes dans la gamme de températures précitée.

La présente invention a pour but de réaliser un générateur permettant de résoudre ce problème.

La présente invention a pour objet un générateur électrochimique à électrolyte non aqueux dont la matière active négative est choisie dans le groupe formé par les métaux alcalins, alcalinoterreux, le magnésium, l'aluminium, caractérisé par le fait que la matière active positive est choisie dans le groupe formé par $CuO$, $Cu_4O (PO_4)_2$, $CF_x$, $MnO_2$, $V_2O_5$, $MoS_3$, $TiS_2$, $V_2S_5$, $V_6O_{13}$, $MoS_2$, $NiPS_3$,
et par le fait que ledit électrolyte non aqueux contient au moins un solvant appartenant à la classe des sulfones linéaires aliphatiques ou aromatiques.

Le solvant est de préférence la diméthylsulfone. On peut également utiliser un mélange de solvants.

Dans le cas où la matière active négative est le lithium, ou le lithium aluminium, le soluté d'électrolyte est choisi avantageusement dans le groupe formé par $LiClO_4$, $LiBF_4$, $LiCF_3SO_3$, $LiAlCl_4$, $LiAsF_6$.

D'autres caractéristiques et avantages de l'invention apparaîtront au cours de la description suivante de modes de réalisation donnés à titre illustratif mais nullement limitatif.

Dans le dessin annexé :

- la figure 1 montre l'évolution de la conductivité spécifique $\Gamma$ d'un électrolyte d'un générateur selon l'invention en fonction de la concentration c de différents solutés, la température T étant de 150°C,

- la figure 2 est une figure analogue à la figure 1, pour une température T de 107°C,

- la figure 3 montre les variations de la conductivité spécifique $\Gamma$ d'un exemple d'électrolyte selon l'invention en fonction de la température T,

- la figure 4 montre des courbes de décharges.

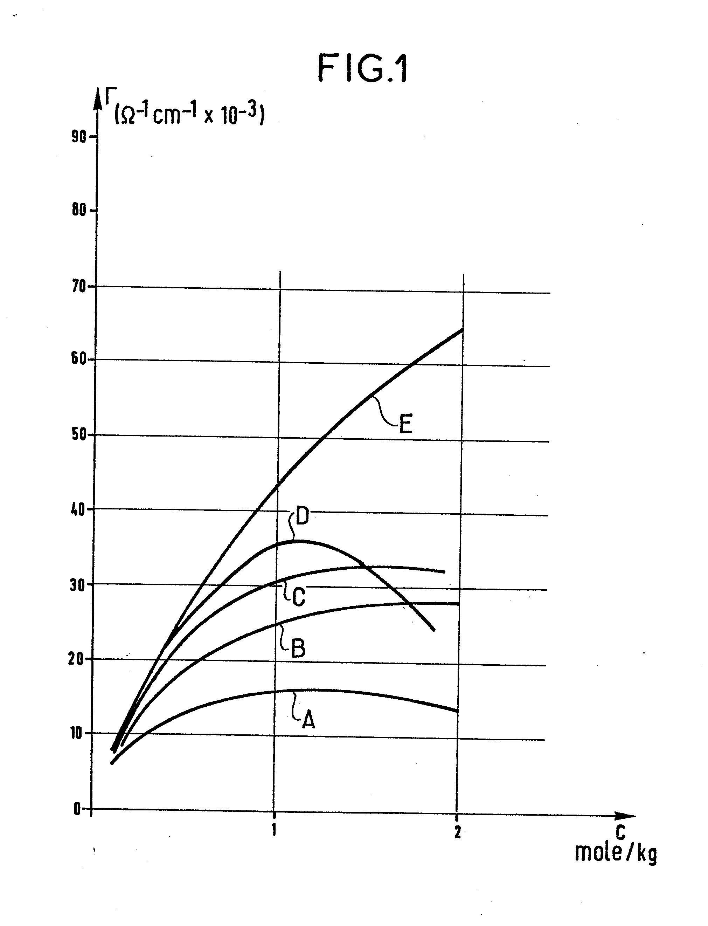

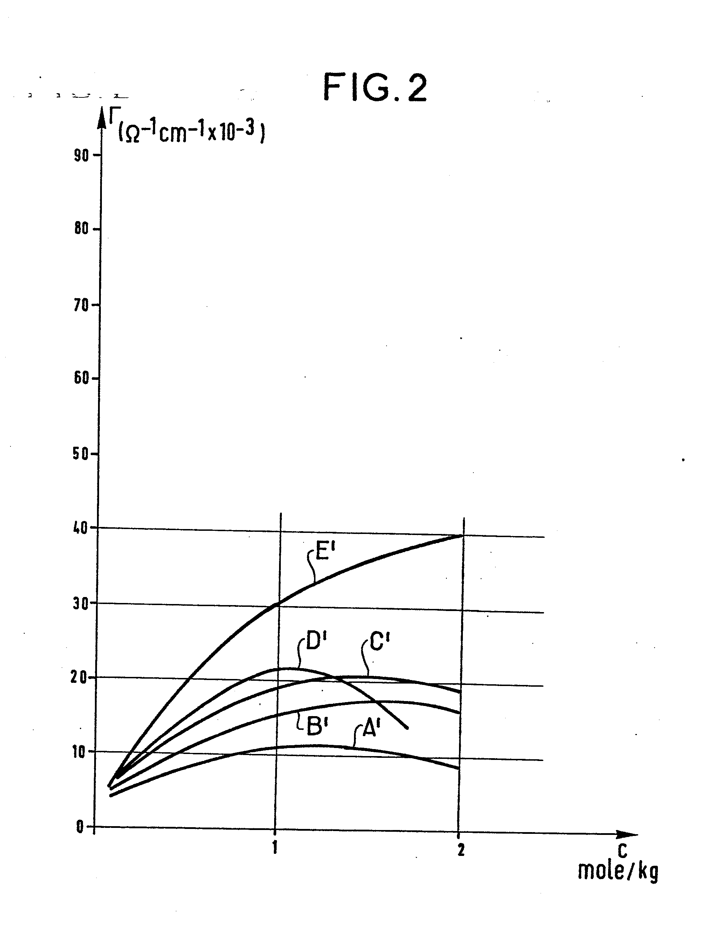

On a réalisé divers électrolytes selon l'invention en dissolvant des solutés dans la diméthylsulfone. On a mesuré leurs conductivités spécifiques $\Gamma$ ($\Omega^{-1}$ cm$^{-1}$) en fonction de la concentration c (moles/kg) des solutés dans les électrolytes à deux températures 150°C (figure 1) et 107°C (figure 2). Dans les figures :

les courbes A-A' sont relatives à $LiCF_3SO_3$

les courbes B-B' sont relatives à $LiBF_4$

les courbes C-C' sont relatives à $LiClO_4$

les courbes D-D' sont relatives à $LiAlCl_4$

les courbes E-E' sont relatives à $LiAsF_6$

On note en particulier les valeurs très élevées obtenues avec l'hexafluoroasénate de lithium, dont la conductivité, contrairement à celles des autres solutés, augmente constamment avec la concentration.

Ainsi une solution 2M $LiAsF_6$ dans la diméthylsulfone présente à 150°C une conductivité spécifique égale à 70 x 10$^{-3}$ $\Omega^{-1}$ cm$^{-1}$.

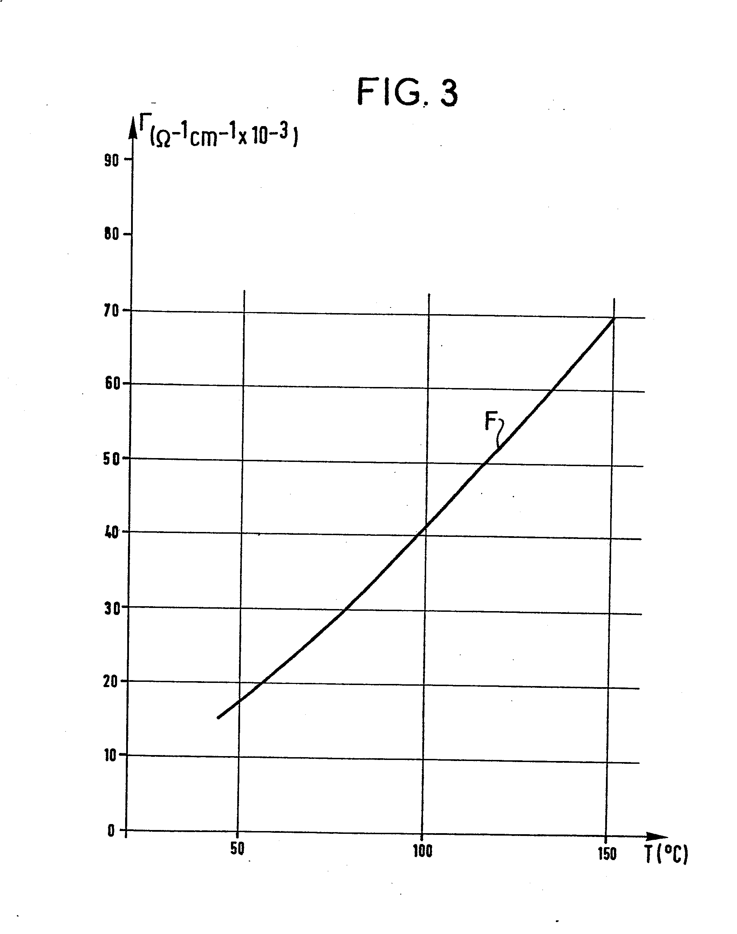

La figure 3 montre (courbe F) les variations de la conductivité spécifique $\Gamma$ de cette solution en fonction de la température T (entre 50°C et 150°C). Bien que la diméthylsulfone ait un point de fusion relativement élevé (107°C), on note que la solution d'électrolyte reste totalement limpide jusqu'à 50°C avec une conductivité encore très acceptable. Cette propriété, propre au système diméthylsulfone/$LiAsF_6$ permet de manière très avantageuse d'étendre le domaine de températures d'utilisation d'un tel électrolyte, à des valeurs nettement inférieures à celles de la fusion du solvant pur.

Selon une variante de mise en oeuvre, on mélange plusieurs solvants selon l'invention ; on réalise des compositions eutectiques déterminées à partir des diagrammes de phases binaires ou ternaires. Ces eutectiques sont susceptibles de constituer de nouveaux solvants complexes utilisant des sulfones linéaires ou aromatiques et de réaliser avec les solutés précités une famille d'électrolytes aux propriétés particulièrement intéressantes.

Les électrolytes précités sont utilisables notamment dans des générateurs à matière active négative en lithium ou en lithium-aluminium, et à matières actives positives très variées compte tenu du domaine d'électroactivité de ces électrolytes qui atteint 5 volts à 150°C. En outre ces électrolytes ont une aptitude à ne solvater que très faiblement les ions ; ceci entraîne une possibilité accrue d'utilisation de matières positives à intercalations réversibles, la présence d'ions $Li^+$ non solvatés facilitant ce processus sans créer de dégradation structurale importante.

A titre d'exemple on réalise des électrodes négatives d'une part à base de CuO et d'autre part à base de $V_2O_5$. Ces électrodes présentent une surface de 1 $cm^2$ environ et une épaisseur de 0,1 mm environ. Elles contiennent 3 mg de matière active mélangée avec 90% de graphite de haute pureté. Ce mélange est comprimé sur une grille de platine de 1 $cm^2$. L'électrolyte est une solution 2M $LiAsF_6$ dans la diméthylsulfone.

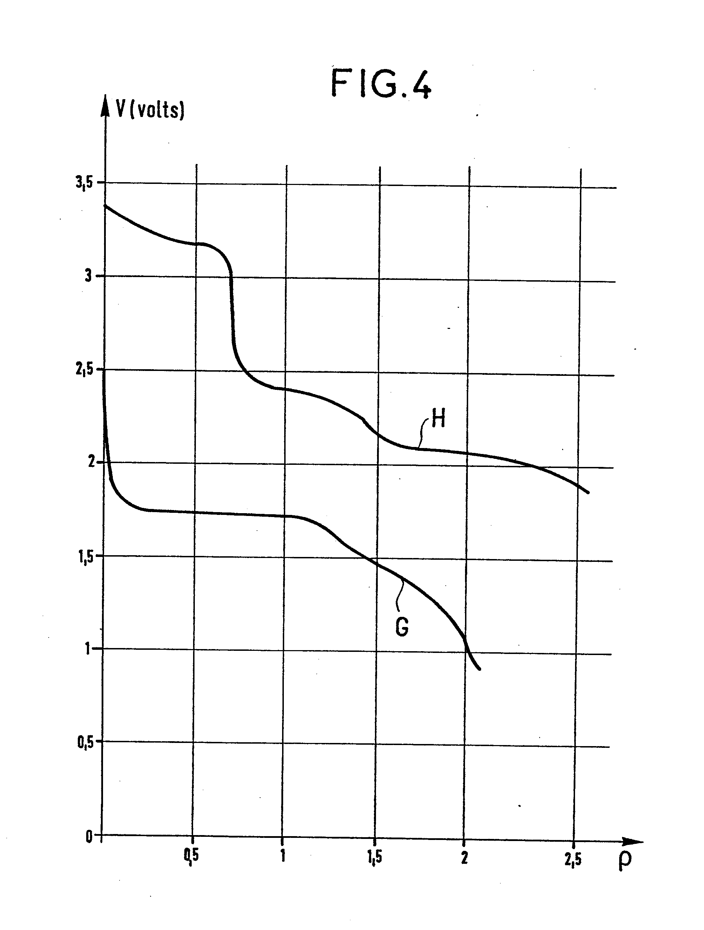

La figure 4 montre les tensions V mesurées en fonction du rendement $\mathcal{C}$ exprimé en Faraday/mole pour une réduction galvanoplastique effectuée sous 1 mA à 150°C. La courbe G correspond à CuO et la courbe H à $V_2O_5$.

Bien entendu on peut remplacer le lithium par l'une des autres matières actives négatives précitées et CuO ou $V_2O_5$ par l'une des autres matières actives précitées.

REVENDICATIONS

1/ Générateur électrochimique à électrolyte non aqueux dont la matière active négative est choisie dans le groupe formé par les métaux alcalins, alcalinoterreux, le magnésium, l'aluminium, caractérisé par le fait que la matière active positive est choisie dans le groupe formé par $CuO$, $Cu_4O (PO_4)_2$, $CF_x$, $MnO_2$, $V_2O_5$, $MoS_3$, $TiS_2$, $V_2S_5$, $V_6O_{13}$, $MoS_2$, $NiPS_3$, et par le fait que ledit électrolyte non aqueux contient au moins un solvant appartenant à la classe des sulfones linéaires aliphatiques ou aromatiques.

2/ Générateur électrochimique selon la revendication 1, caractérisé par le fait que ledit solvant est la diméthylsulfone.

3/ Générateur électrochimique selon l'une des revendications 1 et 2, caractérisé par le fait que ledit électrolyte comporte plusieurs solvants constituant des compositions eutectiques déterminées à partir des diagrammes de phases binaires ou ternaires.

4/ Générateur électrochimique selon l'une des revendications 1 à 3, caractérisé par le fait que ladite matière active négative est du lithium ou du lithium-aluminium et que le soluté d'électrolyte est choisi dans le groupe formé par $LiClO_4$, $LiBF_4$, $LiCF_3SO_3$, $LiAlCl_4$, $LiAsF_6$.

# FIG.1

# FIG.2

0189891

## FIG. 3

FIG.4

Office européen
des brevets

**RAPPORT DE RECHERCHE EUROPEENNE**

**0189891**
Numero de la demande

EP 86 10 1075

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | US-A-3 393 092 (M. SHAW)<br>* Résumé; colonne 3, lignes 36-40; colonne 4, lignes 60-75; colonne 5, lignes 44-61 * | 1,2,4 | H 01 M 6/16 |
| Y | US-A-4 060 674 (L.P. KLEMANN)<br>* Résumé; colonne 3, lignes 29-34, 57-68; colonne 4, lignes 1-13 * | 1,2,4 | |
| A | EP-A-0 049 082 (UNION CARBIDE)<br>* Résumé; page 8, lignes 20-22; page 10, lignes 4-8 * | 1,4 | |
| A | US-A-3 544 385 (G.H. NEWMAN)<br>* Colonne 3, lignes 1-11; colonne 4, lignes 38-58 * | 1,2,4 | |

**DOMAINES TECHNIQUES RECHERCHES (Int. Cl.4)**

H 01 M 6/16
H 01 M 10/40

Le present rapport de recherche a été établi pour toutes les revendications

| Lieu de la recherche | Date d'achèvement de la recherche | Examinateur |
|---|---|---|
| LA HAYE | 12-05-1986 | DE VOS L.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82